# FASCICULE DE BREVET EUROPEEN

(11) **EP 0 749 548 B1**
(45) Date de publication et mention de la délivrance du brevet: **26.08.1998**
(21) Numéro de dépôt: 95915233.1
(22) Date de dépôt: 30.03.1995
(51) Int. Cl.: F16M 11/42

(54) **DISPOSITIF MOBILE DU TYPE SOCLE MOBILE DE PARASOL, A ROUES ESCAMOTABLES ET NON VISIBLES**
BEWEGLICHE VORRICHTUNG VOM TYP SONNENSCHIRMSTÄNDER MIT VERSENKBAREN UND NICHT SICHTBAREN RAEDERN
MOVABLE STAND DEVICE WITH RETRACTABLE CONCEALED WHEELS FOR PARASOLS

(30) Priorité: 31.03.1994 FR 9404269
(43) Date de publication de la demande: 27.12.1996
(73) Titulaire: Société Androll s.a.r.l., 83440 Saint Paul en Foret (FR)
(72) Inventeur: Société Androll s.a.r.l., 83440 Saint Paul en Foret (FR)
(74) Mandataire: Somnier, Jean-Louis
(86) Numéro de dépôt international: FR9500409
(87) Numéro de publication internationale: WO9527169

(56) Documents cités:
- WO-A-92/12311
- CH-A- 682 975
- FR-A- 2 604 426
- GB-A- 103 876
- GB-A- 1 136 591
- US-A- 2 993 740

## Description

### Domaine technique :

La présente invention concerne les dispositifs mobiles du type à roues escamotables et notamment un socle mobile de parasol à roues escamotables et non visibles.

### Etat de la technique :

Les socles de parasol traditionnels sont généralement statiques et difficiles à déplacer. Certains socles, offrant cependant une bonne assise, peuvent entraîner certains risques lors de leurs déplacements tels que maux de dos, traces sur le sol, ou risques d'accidents.

Il existe bien des socles de parasols montés sur roues escamotables tels que celui décrit dans le brevet CH-A-682.975, dans lequel les trois roues escamotables descendent sur le sol lorsqu'on agit sur un levier dont la manoeuvre fait remonter le socle au moyen d'un mécanisme du type pignon-crémaillère. Toutefois, un tel socle présente plusieurs parties mobiles et articulées le rendant complexe et susceptible de se détraquer, et en outre, il n'est pas aisé de le diriger lorsqu'on veut le déplacer dans la mesure où les trois roues ne sont pas toujours dirigées dans le même sens et que le levier servant à faire descendre les roues n'est pas adapté pour déplacer facilement le socle.

### Exposé de l'invention :

C'est pourquoi le but de l'invention est de réaliser un socle de parasol ou autre objet lourd à déplacer, qui ne présente pas de parties mobiles articulées et qui soit aisément déplacable.

L'objet de l'invention est donc un dispositif mobile à roues escamotables destiné à déplacer un objet encombrant ou lourd, notamment un socle de parasol, du type comprenant une armature reposant sur le sol en position de repos, et un système mobile muni de roues escamotées en position de repos et prenant appui sur le sol lorsque le système mobile est manoeuvré pour déplacer l'objet. Le système mobile comprend une partie mobile pivotant autour d'un axe de pivotement solidaire de l'armature, au moins deux roues chacune en rotation libre autour d'un axe fixé à une première extrémité de la partie mobile, un élément de butée situé à une deuxième extrémité de la partie mobile et bloqué dans son déplacement vers le haut par l'armature, et un levier solidaire du système mobile en un point situé à une position intermédiaire entre l'axe de pivotement du système mobile et l'élément de butée. Ainsi, une force vers le bas exercée sur le levier permet, grâce au point d'appui constitué par l'élément de butée bloqué par l'élément de retenue de l'armature, de faire monter l'armature et en même temps descendre les roues jusqu'au sol de façon à pouvoir déplacer l'objet vers un autre emplacement en faisant rouler les roues sur le sol.

### Brève description des figures :

Les buts, objets et caractéristiques de l'invention apparaîtront plus clairement à la lecture de la description qui suit faite en référence aux dessins dans lesquels :
la figure la est une représentation schématique du dispositif de l'invention en position statique,
la figure 1b est une représentation schématique du dispositif de l'invention en position de déplacement,
la figure 2 est une représentation en perspective du système mobile du dispositif de l'invention selon un premier mode de réalisation,
la figure 3 est une représentation en perspective du support d'armature utilisé dans le dispositif de l'invention selon le premier mode de réalisation,
la figure 4 est une représentation schématique montrant l'action de soulèvement de l'armature réalisée par le système mobile lorsque le levier du dispositif de l'invention est manoeuvré,
la figure 5 est une représentation en perspective du système mobile du dispositif de l'invention selon un deuxième mode de réalisation, et
la figure 6 est une vue de dessus en coupe représentant schématiquement le dispositif de l'invention selon le deuxième mode de réalisation.

### Description détaillée de l'invention :

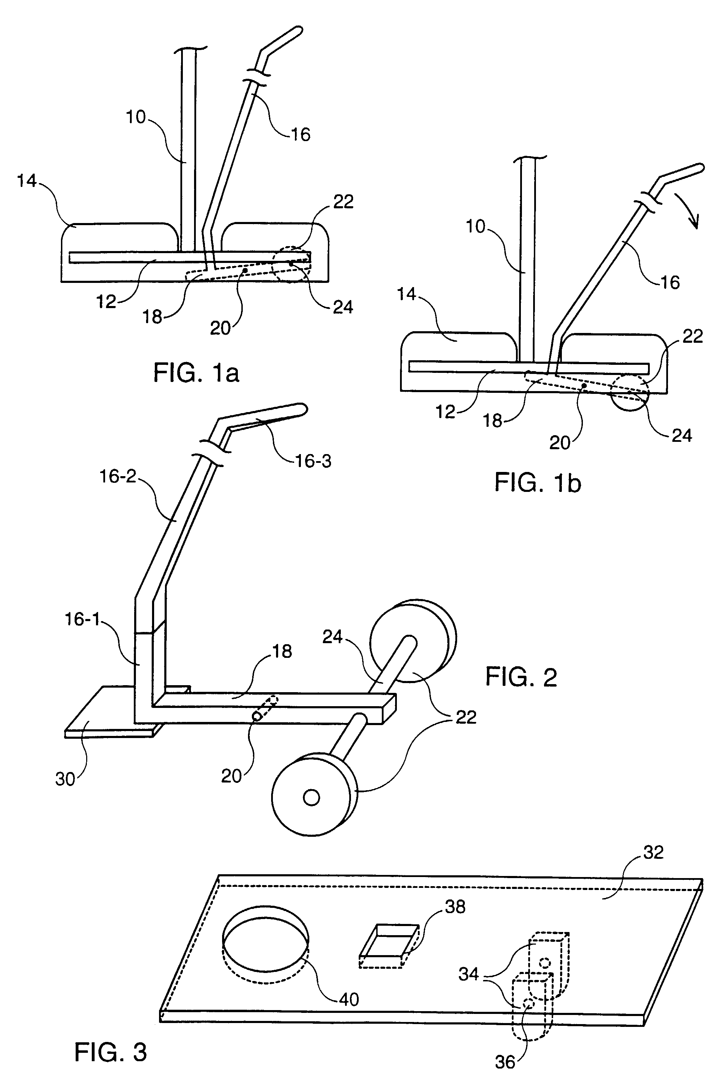

Le dispositif selon l'invention sous forme d'un socle de parasol, représenté schématiquement en position de repos sur la figure la et en position de déplacement sur la figure 1b, comprend essentiellement deux parties, une armature principalement formée de l'objet à déplacer et relativement lourde pour ne pas pouvoir être aisément transportée et un système mobile articulé autour d'un axe solidaire de l'armature.

Dans l'exemple des figures 1a et 1b, l'armature comprend le mât du parasol monté sur une ossature métallique 12 intégrée dans un bâti 14 pouvant être une enveloppe rigide remplie d'eau, de sable ou de béton de façon à présenter un certain poids empêchant le parasol d'être déstabilisé par le vent lorsque l'armature repose sur le sol comme c'est le cas sur la figure la.

Le système mobile est constitué d'un levier 16 fixé perpendiculairement à une partie mobile 18 articulée autour d'un ou plusieurs axes 20 solidaires de l'armature. Le système mobile comprend également deux roues 22 chacune en rotation libre autour d'un axe 24 situé à l'extrémité de la partie mobile 18. Lorsqu'on exerce un effort sur le levier 16 dans le sens de la flèche illustrée sur la figure 1B, l'extrémité de la partie mobile 18, en pivotant autour de l'axe 20, vient buter sur l'ossature métallique. A ce stade, les roues 22 sortent de leur logement et viennent en appui sur le sol. L'effort exercé sur le levier 16 permet alors de faire monter le socle dont l'armature est soulevée vers le haut grâce à la partie mobile 18. Dans cette position, il est alors aisé de maintenir le socle en équilibre grâce au levier 16 et de le déplacer sans grand effort avec une simple traction ou poussée de l'utilisateur. On doit noter que, lors du passage de la position de repos (figure la) à la position de déplacement (figure 1b), tout se passe comme si l'effort de l'utilisateur était démultiplié grâce à un premier effet de levier dont le point d'appui est l'axe 20 et ensuite grâce à un deuxième effet de levier dont le point d'appui est la roue 22.

A l'emplacement désiré, l'utilisateur en relâchant la pression sur le levier 16, permet au socle de venir reposer sur le sol en position statique aux roues de s'escamoter à l'intérieur du bâti 14, et donc de les rendre invisibles.

Dans un mode de réalisation préféré de l'invention illustré sur les figures 2 et 3, le système mobile est formé de la partie mobile 18 constitué d'une barre métallique articulée autour de l'axe 20. A l'extrémité de la barre 18 est fixée une patte métallique 30 destinée à soulever l'armature du socle. Le levier 16 solidaire de la barre métallique 18 est amovible et comprend trois parties: la partie 16-1 qui est la continuation selon un angle compris entre 75° et 90° (de préférence 84°) de la barre 18, sur laquelle vient s'emboîter la partie droite 16-2, elle-même terminée par la partie 16-3 qui sert de poignée à l'utilisateur. Chaque partie forme un angle déterminé avec la partie suivante de manière à limiter l'effort de l'utilisateur, et la longueur du levier est fonction de l'effort demandé donc du poids de l'objet à déplacer.

Dans ce mode de réalisation, l'armature du socle a pour support une plaque métallique 32 illustrée sur la figure 2 comportant deux pattes métalliques 34 soudées sur sa face inférieure et pourvues d'un trou d'axe 36 destiné à recevoir l'axe 20 autour duquel pivote la barre 18 et le système mobile dans son ensemble. La plaque 32 comporte également un évidemment 38 de forme carrée ou rectangulaire pour laisser passer et se déplacer la partie 16-1 du levier 16. Enfin, la plaque 32 comporte un évidemment circulaire 40 dans lequel se trouve placé le mât du parasol, de préférence fixé par dessous à la plaque 32 au moyen d'une plaque circulaire dont le diamètre est supérieur à celui du mât.

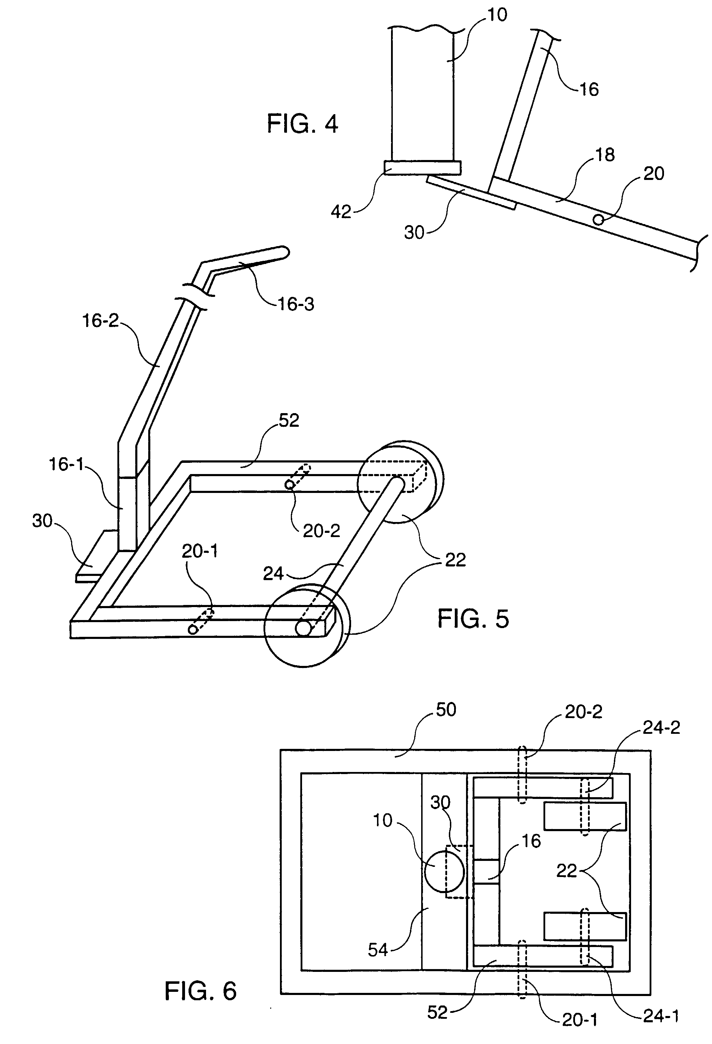

Comme illustré schématiquement sur la figure 4, lorsque l'utilisateur exerce une force vers le bas sur le levier 16, la patte métallique 30 solidaire de la plaque métallique 18 vient soulever l'armature en prenant appui sous la plaque circulaire 42 se trouvant à la base du mât 10 et fixée sous la plaque métallique 32. Il est donc nécessaire que le point de fixation du levier 16 sur la partie 18 soit à une position intermédiaire entre l'axe de pivotement 20 et l'extrémité de la plaque 30 venant en contact avec la patte 30 dans le but de soulever l'armature.

Un deuxième mode de réalisation est illustré sur les figures 5 et 6, dans lequel la plaque 32 (voir figure 3) est remplacée par un cadre 50 et la barre métallique 18 (voir figure 2) est remplacée par un élément en U 52. Dans ce mode de réalisation, le mât 10 est supporté par une barre transversale 54 solidaire du cadre 50, cette barre servant de point d'appui pour le soulèvement de l'armature du parasol.

Les deux branches de l'élément en U 52 sur lequel est fixé le levier 16 en trois parties 16-1, 16-2 et 16-3 comme on l'a vu précédemment, pivotent à l'intérieur du cadre 50 autour de deux axes 20-1 et 20-2 placés respectivement dans deux orifices des deux côtés du cadre 50. L'élément en U 52 comporte à l'extrémité de chacune de ses branches une roue 22 en rotation libre autour de son axe respectif 24-1 ou 24-2 solidaire de chacune des branches de l'élément. Enfin, l'élément en U 52 est pourvu d'une patte métallique 30 fixée à l'extrémité du cadre comportant la barre reliant les deux branches et destinée à soulever le cadre 50 et donc l'armature du socle en exerçant une force vers le haut sous la barre transversale 54, en même temps que les roues 22 descendent et prennent appui sur le sol.

On doit noter que, dans ce deuxième mode de réalisation, la barre transversale (54) solidaire du cadre (50) est située à une position permettant une répartition équilibrée de la masse du cadre et de l'objet lors du déplacement de l'ensemble.

Des modifications peuvent être apportées à l'invention telle qu'elle vient d'être décrite selon deux modes de réalisation. Ainsi, les roues peuvent être remplacées par un patin, aux bords recourbés, ce qui facilite le déplacement du socle sur la neige ou le sable par glissement.

Bien que les deux modes de réalisation décrits concernent un socle de parasol, il est évidemment possible d'adapter l'invention à d'autres objets encombrants et lourds devant être déplacés d'un endroit à un autre. Ainsi l'invention peut être adaptée facilement à des jardinières ou des pots de fleurs, ou bien encore à des supports publicitaires, ou peut même être utilisée comme pied de table permettant à la table d'être déplacée aisément et d'être en même temps stabilisée en position statique. Dans le cas d'une jardinière, le levier a avantage à être placé à l'extérieur du socle, par exemple à l'aide d'une fourche fixée sur les côtés du cadre servant de support à l'armature, le levier étant alors amovible et fixé sur le cadre seulement lorsqu'on doit déplacer la jardinière. On peut également équiper le système de quatre roues plutôt que deux.

## Revendications

1. Dispositif mobile à roues escamotables pour déplacer facilement un objet encombrant ou lourd tel qu'un socle de parasol. comprenant une armature (12), (14) reposant sur le sol en position de repos, et au moins un système mobile comportant au moins une partie mobile (18) pivotant autour d'au moins un axe de pivotement (20) solidaire de ladite armature (12), (14) et un élément de butée (30) situé à une extrémité de ladite partie mobile (18) et bloqué dans son déplacement vers le haut par un élément de retenue de l'armature (12), (14) et un levier (16), lequel système mobile est muni d'au moins deux roues (22) dont chacune est en rotation libre autour d'un axe (24) fixé à une autre extrémité de la partie mobile par rapport à l'élément de butée (30). lesquelles roues sont escamotées en position de repos et viennent prendre appui sur le sol lorsque le système mobile est manoeuvré dans le but de déplacer l'objet, ledit dispositif étant caractérisé en ce que
le système mobile ne comprend qu'une partie mobile (16) portant les deux roues (22),
et le levier (16) est solidaire de ladite partie (18) en un point situé à une position intermédiaire entre ledit axe de pivotement (20) et l'extrémité dudit élément de butée (30),
de sorte qu'une force vers le bas exercée sur ledit (16) levier permet, grâce au point d'appui constitué par ledit élément de butée (30) bloqué par ledit élément de retenue, de faire monter ladite armature (12), (14) par rapport auxdites roues (22) reposant sur le sol et de déplacer ladite armature et ledit objet vers un autre emplacement en faisant rouler les roues sur le sol.

2. Dispositif selon la revendication 1, dans lequel ledit levier (16) comprend trois parties dont une partie sert de poignée pour exercer la force permettant de faire monter ladite armature, les trois parties faisant un angle déterminé entre elles de manière à limiter l'effort de l'utilisateur.

3. Dispositif selon la revendication 1 ou 2, dans lequel ladite armature est une plaque métallique (32) comportant sur sa face inférieure deux pattes (34) disposant chacune d'un orifice (36) pour recevoir ledit axe de pivotement (20) et ladite partie mobile est une barre métallique (18) pouvant pivoter autour dudit axe de pivotement placé dans lesdits orifices.

4. Dispositif selon la revendication 1 ou 2, dans lequel ladite armature est un cadre métallique (50) et ladite partie mobile est un élément métallique (52) en forme de U dont les deux branches comportent chacune une roue (22) et sont reliées audit cadre chacune par un axe de pivotement (20-1 et 20-2).

5. Dispositif selon la revendication 4, dans lequel ledit élément de retenue est une barre transversale (54) solidaire dudit cadre (50) située à une position dudit cadre permettant une répartition équilibrée de la masse dudit cadre et dudit objet lors du déplacement de l'ensemble.

6. Dispositif selon l'une des revendications 1 à 5, comportant en outre un bâti (14) solidaire de ladite armature de manière à rendre lesdites roues escamotables (22) invisibles extérieurement

7. Dispositif selon l'une des revendications 1 à 6, dans lequel ledit objet à déplacer est un parasol.

8. Dispositif selon la revendication 7, dans lequel ledit bâti est une enveloppe remplie d'eau, de sable ou de béton de façon à rendre stable ledit parasol en position statique.

9. Dispositif selon l'une des revendications 1 à 6, dans lequel ledit objet à déplacer est une jardinière.

## Patentansprüche

1. Bewegliche Vorrichtung mit versenkbaren Rädern zum leichten Verschieben eines sperrigen oder schweren Gegenstands wie ein Sonnenschirmständer, mit einem Fuß (12, 14), der in Ruhestellung auf dem Boden ruht, und mit mindestens einem beweglichen System, das mindestens einen beweglichen Abschnitt (18), der um mindestens eine mit dem Fuß (12, 14) fest verbundene Schwenkachse (20) verschwenkbar ist, ein Widerlager (30), das an einem Ende des beweglichen Abschnitts (18) gelegen und in seiner Bewegung nach oben durch eine Halterung des Fußes (12, 14) blockiert ist, und einen Hebel (16) umfaßt, wobei das bewegliche System mit mindestens zwei Rädern (22) versehen ist, die jeweils frei um eine Achse (24) drehbar sind, welche bezüglich des Widerlagers (30) an einem anderen Ende des beweglichen Abschnitts befestigt ist, und wobei die Räder in der Ruhestellung versenkt sind und zur Auflage auf dem Boden kommen, wenn das bewegliche System betätigt wird, um den Gegenstand zu verschieben, dadurch gekennzeichnet, daß
- das bewegliche System nur einen beweglichen Abschnitt (18) aufweist, der die beiden Räder (22) trägt, und
- der Hebel (16) mit dem Abschnitt (18) an einem Punkt zwischen der Schwenkachse (20) und dem Ende des Widerlagers (30) fest verbunden ist,
so daß mit einer nach unten auf den Hebel (16) ausgeübten Kraft dank dem Anlagepunkt, den das Widerlager (30) bildet, welches durch die Halterung blockiert ist, der Fuß (12, 14) bezüglich der auf dem Boden ruhenden Räder (22) angehoben und der Fuß und der Gegenstand an einen anderen Ort bewegt werden können, indem die Räder auf dem Boden gerollt werden.

2. Vorrichtung nach Anspruch 1, bei der der Hebel (16) drei Abschnitte umfaßt, von denen ein Abschnitt als Griff zum Ausüben der Kraft dient, mit der der Fuß angehoben werden kann, und die drei Abschnitte in einem bestimmten Winkel zueinander stehen, so daß der Kraftaufwand des Benutzers begrenzt ist.

3. Vorrichtung nach Anspruch 1 oder 2, bei der der Fuß eine Metallplatte (32) ist, die an ihrer Unterseite zwei Lappen (34) mit jeweils einer Öffnung (36) zur Aufnahme der Schwenkachse (20) aufweist, und der bewegliche Abschnitt (18) eine Metallstange ist, die um die in den Öffnungen gelagerte Schwenkachse verschwenken kann.

4. Vorrichtung nach Anspruch 1 oder 2, bei der der Fuß ein Metallrahmen (50) und der bewegliche Abschnitt ein Metallelement (52) in Form eines U ist, dessen zwei Schenkel jeweils ein Rad (22) aufweisen und mit dem Rahmen jeweils durch eine Schwenkachse (20-1 und 20-2) verbunden sind.

5. Vorrichtung nach Anspruch 4, bei der die Halterung eine Querstange (54) ist, die mit dem Rahmen (50) fest verbunden und an einer Position des Rahmens gelegen ist, die eine ausgeglichene Verteilung der Masse des Rahmens und des Gegenstands bei der Verschiebung des Ganzen gestattet.

6. Vorrichtung nach einem der Ansprüche 1 bis 5, die weiter einen Sockel (14) umfaßt, der derart mit dem Fuß fest verbunden ist, daß die versenkbaren Räder (22) von außen nicht sichtbar sind.

7. Vorrichtung nach einem der Ansprüche 1 bis 6, bei der der zu verschiebende Gegenstand ein Sonnenschirm ist.

8. Vorrichtung nach Anspruch 7, bei der der Sockel ein mit Wasser, Sand oder Beton gefülltes Behältnis ist, um den Sonnenschirm in der Ruhestellung zu stabilisieren.

9. Vorrichtung nach einem der Ansprüche 1 bis 6, bei der der zu verschiebende Gegenstand ein Blumenständer ist.

## Claims

1. Movable device with retractable wheels to move easily a bulky or heavy object, such as a parasol stand, including a framework (12)(14) that rests on the ground when in the rest position, and at least one movable system comprising at least one movable part (18) rotating about at least one pivot axis (20) which is secured to said framework (12)(14) and an abutment member (30) located at one end of said movable part (18) and blocked in its upward movement by a retaining element of the framework (12)(14) and a lever (16), which mobile system is provided with at least two wheels (22) each of them being in free rotation about an axis (24) that is fixed to another end of the mobile part with respect to the abutment member (30), which wheels are retracted in rest position and abut on the ground when the mobile system is manoeuvred for the purpose of moving the object, said device being characterized in that
the mobile system comprises only a mobile part (16) bearing the two wheels (22),
and the lever (16) is secured to said part (18) at a point located at an intermediate position between said pivot axis (20) and the end of said abutment member (30),
so that a force applied downwardly on said lever (16) makes it possible, thanks to the bearing constituted by said abutment member (30) blocked by said retaining element, to raise said framework (12)(14) with respect to said wheels (22) resting on the ground, and to move said framework and said object to another location by running the wheels over the ground.

2. Device according to Claim 1, in which said lever (16) includes three parts, one of which is used as a handle to apply the force for raising said framework, the three parts forming a determined angle with each other so as to limit the user's effort.

3. Device according to Claim 1 or 2, in which said framework is a metallic plate (32), including on its lower face two tabs (34), that are each provided with a hole (36) to receive said pivot axis (20) and said mobile part is a metallic bar (18) that can rotate about said pivot axis located in said holes.

4. Device according to Claim 1 or 2, in which said framework is a metallic frame (50) and said movable part is a U-shaped metallic element (52), of which the two branches each have a wheel (22) and are each linked to said frame by a pivot axis (20-1) and (20-2).

5. Device according to Claim 4, in which said retaining element is a transverse bar (54) fast with said frame (50) located in a position of said frame that allows a balanced distribution of the frame and object weight when the assembly moves.

6. Device according to one of Claims 1 to 5, further including a frame (14) that is fast with said framework so as to render said retractable wheels (22) invisible from the outside.

7. Device according to one of Claims 1 to 6, in which said object to be moved is a parasol.

8. Device according to Claim 7, in which said frame is a casing filled with water, sand or concrete, in order to give a better stability to the parasol in the static position.

9. Device according to one of Claims 1 to 6, in which the object to be moved is a window box.
